(19) Europäisches Patentamt
European Patent Office
Office européen des brevets

(11) **EP 4 757 400 A1**

(12) **EUROPEAN PATENT APPLICATION**
published in accordance with Art. 153(4) EPC

(43) Date of publication:
**10.06.2026 Bulletin 2026/24**

(21) Application number: **24850951.5**

(22) Date of filing: **05.08.2024**

(51) International Patent Classification (IPC):
***H04W 24/10*** *(2009.01)*

(52) Cooperative Patent Classification (CPC):
**H04L 5/00; H04W 24/10; H04W 36/00**

(86) International application number:
**PCT/CN2024/109692**

(87) International publication number:
**WO 2025/031306 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.08.2023 CN 202310979064
11.08.2023 CN 202311012489**

(71) Applicant: **Vivo Mobile Communication Co., Ltd.
Dongguan, Guangdong 523863 (CN)**

(72) Inventors:
• **WANG, Chenxi**
**Dongguan, Guangdong 523863 (CN)**
• **TAMRAKAR, Rakesh**
**Dongguan, Guangdong 523863 (CN)**

(74) Representative: **Walaski, Jan Filip et al
Venner Shipley LLP
TIDE Bankside
8 Emerson Street
London SE1 9DU (GB)**

(54) **TRANSMISSION METHOD AND APPARATUS, AND TERMINAL, NETWORK-SIDE DEVICE AND READABLE STORAGE MEDIUM**

(57)     The present application belongs to the technical field of communications. Disclosed are a transmission method and apparatus, and a terminal, a network-side device and a readable storage medium. The transmission method in the embodiments of the present application comprises: a terminal determining the priority of a first report on the basis of a first priority rule; and the terminal arranging the content in the first report on the basis of the priority and generating uplink control information (UCI), and transmitting the UCI on a target resource, wherein the first report comprises at least one measurement result associated with a first object, and the first object is an object different from the current service object of the terminal.

A terminal determines a priority of a first report according to a first priority rule — 201

↓

The terminal arranges content of the first report based on the priority to generate UCI, and transmits the UCI on a target resource — 202

FIG. 2

**Description**

**CROSS-REFERENCE TO RELATED APPLICATIONS**

This application claims the priority of Chinese Patent Application No. 202311012489.X filed in China on August 11, 2023 and China Patent Application No. 202310979064.X filed in China on August 04, 2023, the entire contents of which are incorporated herein by reference.

**TECHNICAL FIELD**

This application relates to the field of communication technologies, and specifically, to a transmission method and apparatus, a terminal, a network-side device, and a readable storage medium.

**BACKGROUND**

For a high-speed mobility scenario, to reduce a handover latency, a layer 1 (Layer 1, L1)/L2-triggered mobility (L1/L2-triggered mobility, LTM) has been introduced in the related technology. Currently, in LTM, only an L1 measurement result is supported to be reported through uplink control information (Uplink Control Information, UCI), and the L1 report used for LTM is different from a conventional channel state information (Channel State Information, CSI) report. In the related technology, to improve resource utilization, reporting resources corresponding to different L1 reports may overlap, or reporting resources corresponding to the L1 report used for LTM and the conventional CSI report may overlap. Consequently, orderliness of these reporting resources cannot be guaranteed during UCI mapping.

**SUMMARY**

Embodiments of this application provide a transmission method and apparatus, a terminal, a network-side device, and a readable storage medium, to solve the problem that in L1/L2-triggered mobility, reporting resources corresponding to different L1 reports may overlap, which results in an inability to guarantee orderliness of the reporting resources during UCI mapping.

In a first aspect, a transmission method is provided. The method is performed by a terminal and includes:

the terminal determines a priority of a first report according to a first priority rule; and
the terminal arranges content of the first report based on the priority to generate uplink control information UCI, and transmits the UCI on a target resource, where
the first report includes at least one measurement result associated with a first object, and the first object is an object different from a current serving object of the terminal.

In a second aspect, a transmission method is provided. The method is performed by a network-side device and includes:

the network-side device receives UCI reported by a terminal, where the UCI includes content of a first report arranged based on a priority of the first report, and the priority of the first report is determined according to a first priority rule, where
the first report includes at least one measurement result associated with a first object, and the first object is an object different from a current serving object of the terminal.

In a third aspect, a transmission apparatus is provided. The apparatus is applied to a terminal and includes:

a determination module, configured to determine a priority of a first report according to a first priority rule; and
a transmission module, configured to arrange content of the first report based on the priority to generate UCI, and transmit the UCI on a target resource, where
the first report includes at least one measurement result associated with a first object, and the first object is an object different from a current serving object of the terminal.

In a fourth aspect, a transmission apparatus is provided. The apparatus is applied to a network-side device and includes:

a receiving module, configured to receive UCI reported by a terminal, where the UCI includes content of a first report arranged based on a priority of the first report, and the priority of the first report is determined according to a first priority rule, where

the first report includes at least one measurement result associated with a first object, and the first object is an object different from a current serving object of the terminal.

In a fifth aspect, a terminal is provided. The terminal includes a processor and a memory. The memory stores a program or instructions runnable on the processor. The program or instructions are executed by the processor to implement the steps of the method in the first aspect.

In a sixth aspect, a terminal is provided, including a processor and a communication interface. The processor is configured to determine a priority of a first report according to a first priority rule; and arrange content of the first report based on the priority and generate UCI, and the communication interface is configured to transmit the UCI on a target resource. The first report includes at least one measurement result associated with a first object, and the first object is an object different from a current serving object of the terminal.

In a seventh aspect, a network-side device is provided. The network-side device includes a processor and a memory. The memory stores a program or instructions runnable on the processor. The program or instructions are executed by the processor to implement the steps of the method in the second aspect.

In an eighth aspect, a network-side device is provided, including a processor and a communication interface. The communication interface is configured to receive UCI reported by a terminal. The UCI includes content of a first report arranged based on a priority of the first report, the priority of the first report is determined according to a first priority rule, the first report includes at least one measurement result associated with a first object, and the first object is an object different from a current serving object of the terminal.

In a ninth aspect, a readable storage medium is provided. The readable storage medium stores a program or instructions. The program or instructions are executed by a processor to implement the steps of the method in the first aspect or implement the steps of the method in the second aspect.

In a tenth aspect, a wireless communication system is provided, including a terminal and a network-side device. The terminal may be configured to perform the steps of the method in the first aspect, and the network-side device may be configured to perform the steps of the method in the second aspect.

In an eleventh aspect, a chip is provided. The chip includes a processor and a communication interface. The communication interface is coupled to the processor. The processor is configured to run a program or instructions, to implement the method in the first aspect or implement the method in the second aspect.

In a twelfth aspect, a computer program/program product is provided. The computer program/program product is stored in a storage medium. The computer program/program product is executed by at least one processor, to implement the steps of the method in the first aspect or implement the steps of the method in the second aspect.

In embodiments of this application, during serving object handover, the terminal may determine the priority of the first report according to the first priority rule, arrange the content of the first report based on the priority to generate the UCI, and report the UCI. Further, the content of the first report is arranged based on the priority of the first report to generate the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side.

## BRIEF DESCRIPTION OF THE DRAWINGS

FIG. 1 is a block diagram of a wireless communication system to which an embodiment of this application may be applied.
FIG. 2 is a flowchart of a transmission method according to an embodiment of this application.
FIG. 3 is a flowchart of another transmission method according to an embodiment of this application.
FIG. 4 is a structural diagram of a transmission apparatus according to an embodiment of this application.
FIG. 5 is a structural diagram of another transmission apparatus according to an embodiment of this application.
FIG. 6 is a structural diagram of a communication device according to an embodiment of this application.
FIG. 7 is a structural diagram of a terminal according to an embodiment of this application.
FIG. 8 is a structural diagram of a network-side device according to an embodiment of this application.

## DETAILED DESCRIPTION

The following clearly describes the technical solutions in embodiments of this application with reference to the accompanying drawings in embodiments of this application. Apparently, the described embodiments are some of embodiments of this application rather than all of embodiments. All other embodiments obtained by a person of ordinary skill in the art based on embodiments of this application fall within the scope of protection of this application.

In this application, the terms "first", "second", and the like are used to distinguish similar objects, but are not used to describe a specific sequence or order. The terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" covers three solutions, that is, solution I: including A and excluding B; solution II: including B and excluding A; and solution III: including both A and B. The character "/" generally indicates an "or" relationship between the associated objects.

In this application, the term "indication" may be a direct indication (or referred to as an explicit indication) or an indirect indication (or referred to as an implicit indication). The direct indication may be understood as that a sender clearly informs a receiver of content, such as specific information, an operation that needs to be performed, or a request result, in a sent instruction. The indirect indication may be understood as that the receiver determines corresponding information according to the sent indication, or performs judgment and determines the operation that needs to be performed, the request result, or the like according to a judgment result.

The technology described in embodiments of this application is not limited to a long term evolution (Long Term Evolution, LTE)/LTE-advanced (LTE-Advanced, LTE-A) system, and may be further applied to another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. In embodiments of this application, the terms "system" and "network" are typically interchangeably used, and the described technology may be applied to both the system and the wireless technology mentioned above, or may be applied to another system and wireless technology. A new radio (New Radio, NR) system is described below as an example, and the term NR is used in most of the following description. Nevertheless, the technologies may be applied to a system other than the NR system, such as a 6$^{th}$ generation (6$^{th}$ Generation, 6G) communication system.

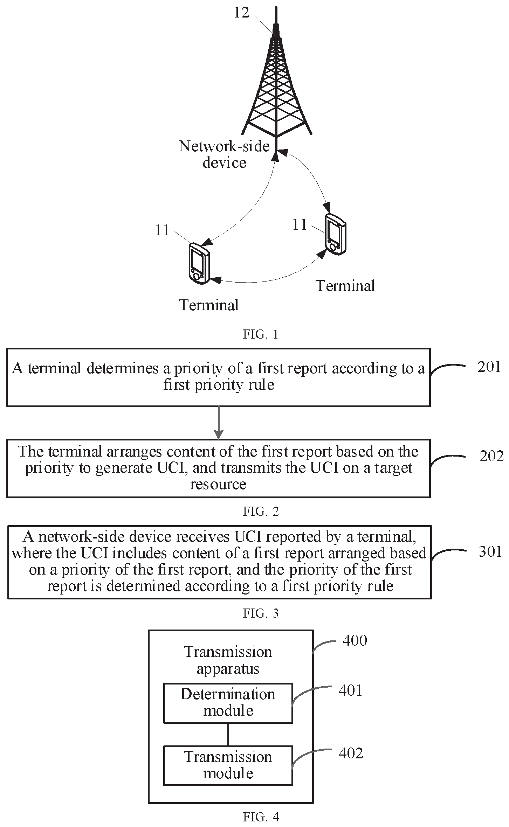

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipboard equipment, pedestrian user equipment (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart tracker, a smart headset, smart glasses, smart jewelry (a smart bracelet, a smart chain bracelet, a smart ring, a smart necklace, a smart ankle bangle, and a smart ankle chain), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. A specific type of the terminal 11 is not limited in this embodiment of this application. The network-side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (AP), a wireless fidelity (Wireless Fidelity, WiFi) node, or the like. The base station may be referred to as a node B (Node B, NB), an evolved node B (Evolved Node B, eNB), the next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another suitable term in the art. As long as a same technical effect is achieved, the base station is not limited to specific technical terms. In this embodiment of this application, only a base station in the NR system is used as an example for introduction, and a specific type of the base station is not limited.

For ease of understanding, the following explains the relevant concepts and terms that may be involved in embodiments of this application.

In the related technology, L1/L2-triggered mobility (LTM) is introduced, and a handover process of LTM is as follows:

(1) Radio resource control (Radio Resource Control, RRC) pre-configuration: A terminal receives pre-configuration information of a candidate cell that is delivered by a network side.

(2) Measurement reporting: The terminal obtains an L1 measurement result by measuring a reference signal (Reference Signal, RS) (such as a synchronization signal and PBCH block (Synchronization Signal and PBCH block, SSB)) of a current serving cell and a neighboring cell, and reports the L1 measurement result.

(3) Handover command: The terminal receives cell handover signaling sent by the network side, and applies RRC configuration information of a target cell.

(4) Downlink synchronization and automatic gain control (AGC) adjustment: The terminal decodes a demodulation reference signal (Demodulation Reference Signal, DMRS) of a physical broadcast channel (Physical broadcast channel, PBCH) and the PBCH based on the 1 st SSB of the target cell after RRC reconfiguration, to obtain a system frame number, a half-frame indication, and an SSB indication, performs downlink synchronization at the frame level, the slot level, and the symbol level, and adjusts an AGC parameter based on a received power of an SSB.

(5) Uplink synchronization: After downlink synchronization, the terminal performs uplink synchronization via a random access channel (Random Access Channel, RACH) until the terminal receives a random access response to obtain a timing advance (Timing Advance, TA), and then the uplink synchronization is completed.

Currently, cross-cell beam measurement and reporting have been supported in both the multiple-input multiple-output (Multiple-Input Multiple-Output, MIMO) project and the LTM project. In the MIMO project, cross-cell beam measurement and reporting are for a scenario in which a serving cell does not change (that is, non-handover). Therefore, configuration information of a measurement resource of a neighboring cell is placed under configuration information of a current serving cell, and cross-cell beam reporting follows a conventional channel state information (CSI) reporting framework.

In LTM, only SSB-based L1 reference signal received power (Reference Signal Received Power, RSRP) measurement is supported. That is, a terminal determines time-domain and frequency-domain resources corresponding to an SSB of a current serving cell and an SSB of a neighboring cell based on RRC parameters configured by a network side, such as ssb-PositionInBurst, ssb-periodicity, and subcarrier spacing (SCS), and performs measurement on the time-domain and frequency-domain resources, to obtain an L1-RSRP measurement value. L cells are selected based on L1-RSRP measurement values, and M beam measurement results are selected from each of the L cells and reported the M beam measurement results to a source cell. LTM supports periodic, semi-persistent, and aperiodic beam reporting. A reporting resource may be a physical uplink control channel (Physical Uplink Control Channel, PUCCH) and a physical uplink shared channel (Physical Uplink Shared Channel, PUSCH). Because LTM is applied to a cell handover scenario, configuration information of a measurement resource of a neighboring cell needs to be independent of configuration information of a current serving cell. To reduce a handover latency, in LTM, beam measurement performed by a terminal on the neighboring cell is performed before cell handover. Considering signaling overhead, in LTM, the configuration information of the measurement resource of the neighboring cell is configured to the terminal via an independent parameter set.

CSI reporting priority:

For a conventional CSI report, when reporting resources corresponding to a plurality of CSI reports overlap in time domain, the terminal may, according to a CSI report priority formula, calculate priority evaluation values of the plurality of CSI reports, respectively. A smaller priority evaluation value of a CSI report indicates a higher priority of the CSI report. Subsequently, the terminal performs arrangement and UCI mapping based on priorities of the CSI reports. When the reporting resource is incapable of carrying the plurality of CSI reports, a CSI report with a low priority is discarded. A CSI report priority formula is specifically as follows:

$$\mathrm{Pr}\,i_{CSI}(y,k,c,s) = 2 \cdot N_{cells} \cdot M_s \cdot y + N_{cells} \cdot M_s \cdot k + M_s \cdot c + s$$

where

for an aperiodic CSI report reported on a PUSCH, $y=0$; for a semi-persistent CSI report reported on a PUSCH, $y=1$; for a semi-persistent CSI report reported on a PUCCH, $Y=2$; and for a CSI report reported on a PUCCH, $y=3$;
for a CSI report whose reported measurement quantity is an L1-RSRP or an L1-SINR, $k=0$; for a CSI report whose reported measurement quantity is neither an L1-RSRP nor an L1-SINR, $k=1$;
$c$ denotes a serving cell index of a reporting resource associated with the CSI report; and $N_{cells}$ denotes a value of an RRC parameter maxNrofServingCells; and

$s$ denotes a configuration identifier (ReportConfigId) of the CSI report, and $M_s$ denotes a value of an RRC parameter maxNrofCSI-ReportConfigurations.

A transmission method and apparatus, and a relevant device, such as a terminal, that are provided in embodiments of this application are described in detail below through some embodiments and application scenarios thereof with reference to the accompanying drawings.

Refer to FIG. 2. FIG. 2 is a flowchart of a transmission method according to an embodiment of this application. The method is applied to a terminal. As shown in FIG. 2, the transmission method includes the following steps:

Step 201: The terminal determines a priority of a first report according to a first priority rule.

The first report includes at least one measurement result associated with a first object, and the first object is an object different from a current serving object of the terminal. Optionally, the object may be a sending/receiving node, a cell, a cell group, a primary cell in the cell group, or the like. For example, the current serving object of the terminal is a cell A, and the first object may be a neighboring cell of the cell A, such as a cell B. The measurement result in the first report includes at least one measurement result associated with the cell B, and the first report is associated with at least one measurement resource of the cell B. Configuration information of the measurement resource of the cell B is independent of configuration information of the cell A.

In this embodiment of this application, the first priority rule may be a predefined or preconfigured priority rule. The first priority rule is used for determining the priority of the first report. For example, the first priority rule is as follows: a priority of an aperiodic first report is higher than a priority of a semi-persistent first report, and the priority of the semi-persistent first report is higher than a priority of a periodic first report. Further, the terminal can determine the priority of the first report based on whether the first report is periodic, non-periodic, or semi-persistent.

The foregoing is merely example description, and content of the first priority rule may further be other possible cases, which are described in detail in the following embodiments and are not further listed herein.

Step 202: The terminal arranges content of the first report based on the priority to generate UCI, and transmits the UCI on a target resource.

For example, it is assumed that there are two first reports, which are an aperiodic first report and a periodic first report, respectively, when the UCI is generated based on the two first reports, content of the aperiodic first report may be arranged before content of the periodic first report to generate the UCI.

Optionally, the target resource may refer to a frequency-domain resource and/or a time-domain resource. After arranging the content of the first report based on the priority of the first report to generate the UCI, the terminal transmits the UCI on the target resource, to report the content of the first report to a network side. The first report includes at least one measurement result associated with the first object, and the first object is an object different from the current serving object of the terminal. Further, the network side can determine, based on the measurement result that is reported by the terminal and that is associated with the first object, whether to trigger the terminal to perform serving object handover such as cell handover.

In this embodiment of this application, during serving object handover, the terminal may determine the priority of the first report according to the first priority rule; and arrange the content of the first report based on the priority to generate the UCI, and report the UCI. Further, the content of the first report is arranged based on the priority of the first report to generate the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side.

Optionally, the first priority rule is related to at least one of the following:

a time-domain reporting characteristic corresponding to a third report;
a reported measurement quantity corresponding to the third report;
a reporting resource corresponding to the third report;
a serving cell identifier associated with the third report;
a reporting configuration identifier corresponding to the third report;
a measurement result carried in the third report;
a measurement resource associated with the third report;
a priority value of the third report; and
first indication information, where the first indication information indicates the priority of the first report, and the first indication information is configured or indicated by a network-side device.

The third report includes at least one of the first report and a second report.

For example, it is assumed that the third report is the first report, the priority of the first report may be determined based on a time-domain reporting characteristic of the first report, or the priority of the first report may be determined based on a reported measurement quantity of the first report. Alternatively, the third report may include the first report and the second report. In this case, priorities of the first report and the second report may be determined based on reporting resources of the first report and the second report, associated serving cell identifiers, and the like. A possible case of the first priority rule is described below in detail.

Optionally, in a case that the first priority rule is related to the time-domain reporting characteristic corresponding to the third report, the first priority rule includes at least one of the following:

> a priority of an aperiodic first report is higher than a priority of a semi-persistent first report;
> the priority of the aperiodic first report is higher than a priority of a periodic first report; and
> the priority of the semi-persistent first report is higher than the priority of the periodic first report.

Optionally, in a case that the first priority rule is related to the reported measurement quantity corresponding to the third report, the first priority rule includes at least one of the following:

> a priority of a first report whose reported measurement quantity is a first measurement quantity is higher than a priority of a first report whose reported measurement quantity is not the first measurement quantity;
> a priority of a second report whose reported measurement quantity is the first measurement quantity is higher than the priority of the first report whose reported measurement quantity is not the first measurement quantity; and
> the priority of the first report whose reported measurement quantity is the first measurement quantity is higher than a priority of a second report whose reported measurement quantity is not the first measurement quantity.

The first measurement quantity is a layer 1 reference signal received power L1-RSRP or a layer 1 signal to interference plus noise ratio L1-SINR.

Optionally, in a case that the first priority rule is related to the time-domain reporting characteristic and the reporting resource that correspond to the third report, the first priority rule includes at least one of the following:

> a priority of a semi-persistent first report whose reporting resource is a physical uplink shared channel PUSCH is higher than a priority of a semi-persistent first report whose reporting resource is a physical uplink control channel PUCCH;
> a priority of an aperiodic first report is higher than a priority of a semi-persistent second report whose reporting resource is a PUSCH;
> a priority of an aperiodic second report is higher than the priority of the semi-persistent first report whose reporting resource is the PUSCH;
> the priority of the semi-persistent first report whose reporting resource is the PUSCH is higher than a priority of a semi-persistent second report whose reporting resource is a PUCCH;
> the priority of the semi-persistent second report whose reporting resource is the PUSCH is higher than the priority of the semi-persistent first report whose reporting resource is the PUCCH;
> the priority of the semi-persistent second report whose reporting resource is the PUCCH is higher than a priority of a periodic first report; and
> the priority of the semi-persistent first report whose reporting resource is the PUCCH is higher than a priority of a periodic second report.

Optionally, in a case that the first priority rule is related to the serving cell identifier associated with the third report, the first priority rule includes at least one of the following:

> a smaller serving cell identifier associated with a first report indicates a higher priority of the first report; and
> in the first report and the second report that are associated with different serving cell identifiers, a report associated with a smaller serving cell identifier has a higher priority.

Optionally, in a case that the first priority rule is related to the reporting configuration identifier corresponding to the third report, the first priority rule includes at least one of the following:

> a smaller reporting configuration identifier corresponding to a first report indicates a higher priority of the first report; and
> in the first report and the second report that are associated with different reporting configuration identifiers, a report with a smaller reporting configuration identifier has a higher priority.

Optionally, in a case that the first priority rule is related to the measurement result carried in the third report, the first priority rule includes at least one of the following:

a priority of a first report that carries a measurement result of a current serving object is higher than a priority of a first report that does not carry the measurement result of the current serving object; and

a priority of a first report that carries at least one measurement result of a first object associated with a second frequency point is higher than a priority of a first report that carries only a measurement result of a first object associated with a first frequency point, where the first frequency point is a frequency point at which the current serving object of the terminal is located, and the second frequency point is a frequency point different from the first frequency point.

Optionally, in a case that the first priority rule is related to the measurement resource associated with the third report, the first priority rule includes:

a priority of a first report that is associated with at least one measurement resource associated with a second frequency point is higher than a priority of a first report that is associated with a measurement resource only associated with a first frequency point, where the first frequency point is a frequency point at which the current serving object of the terminal is located, and the second frequency point is a frequency point different from the first frequency point.

Optionally, in a case that the third report includes the first report and the second report, the first indication information indicates whether the priority of the first report is higher than or lower than a priority of the second report. A type of the first report is the same as a type of the second report.

It should be noted that in a case that whether the priority of the first report is higher than or lower than the priority of the second report is determined based on the first indication information, the type of the first report and the type of the second report include at least one of the following:

the first report is an aperiodic first report, and the second report is an aperiodic second report;

the first report is a semi-persistent first report whose reporting resource is a PUSCH, and the second report is a semi-persistent second report whose reporting resource is a PUSCH;

the first report is a semi-persistent first report whose reporting resource is a PUCCH, and the second report is a semi-persistent second report whose reporting resource is a PUCCH;

the first report is a periodic first report, and the second report is a periodic second report;

the first report is a first report whose reported measurement quantity is a first measurement quantity, and the second report is a second report whose reported measurement quantity is the first measurement quantity;

the first report is a first report whose reported measurement quantity is not the first measurement quantity, and the second report is a second report whose reported measurement quantity is not the first measurement quantity;

the first report and the second report are associated with a same serving cell identifier;

the first report and the second report are associated with a same reporting configuration identifier; and

the first report and the second report are associated with a same priority value.

That is, in the foregoing cases, the priorities of the first report and the second report may be determined based on the first indication information, that is, determined based on the first indication information configured or indicated by a network.

Optionally, in this embodiment of this application, the second report satisfies at least one of the following:

the second report is associated with only a measurement resource of the current serving object of the terminal; and

the second report is associated with at least one measurement resource of a second object, where the second object is different from the current serving object of the terminal, and configuration information of the measurement resource of the second object is included in configuration information of the current serving object of the terminal.

In this embodiment of this application, the first report is associated with at least one measurement resource of the first object, and the first object is an object different from the current serving object of the terminal. If the second report is associated with only the measurement resource of the current serving object of the terminal, the measurement resource associated with the first report includes a measurement resource different from the measurement resource associated with the second report. Alternatively, the second report may be associated with at least one measurement resource associated with the second object. The second object is an object different from the current serving object of the terminal, such as a neighboring cell of the terminal.

Optionally, the first report is a beam report or a CSI report; and the second report may be a beam report or a CSI report.

Optionally, in this embodiment of this application, the method further includes:

The terminal determines a priority value of the third report based on a first parameter, where

the first parameter includes at least one of the following:

first information, where the first information indicates whether the priority of the first report is higher than the priority of the second report, and the first information is configured or indicated by the network;

the time-domain reporting characteristic and the reporting resource that correspond to the third report;

the reported measurement quantity corresponding to the third report;

a serving cell identifier associated with the third report; and

the reporting configuration identifier corresponding to the third report.

For example, if the third report includes the first report and the second report, the terminal may determine the priorities of the first report and the second report based on the first information, that is, determine, based on the first information configured or indicated by the network, whether the priority of the first report is higher than the priority of the second report. Further, the terminal can determine an arrangement sequence of the content of the first report and content of the second report according to indication of the first information, to generate the UCI. It should be noted that, if the first information indicates that the priority of the first report is higher than the priority of the second report, it may be determined that a priority value of the first report is less than a priority value of the second report.

Alternatively, the third report may include only the first report or the second report. For example, an example in which the third report is the first report is used. In this case, the terminal may determine the priority value of the first report based on at least one of a time-domain reporting characteristic corresponding to the first report, a reported measurement quantity, a serving cell identifier associated with the first report, and a reporting configuration identifier corresponding to the first report. Similarly, the terminal may determine the priority value of the second report based on at least one of a time-domain reporting characteristic corresponding to the second report, a reported measurement quantity, a serving cell identifier associated with the second report, and a reporting configuration identifier corresponding to the second report.

It should be noted that, for the PUSCH, the time-domain reporting characteristic of the first report or the second report refers to whether the first report or the second report is aperiodically or semi-persistently reported. For the PUCCH, the time-domain reporting characteristic of the first report or the second report refers to whether the first report or the second report is periodically or semi-persistently reported.

In this embodiment of this application, the terminal can determine the priority value of the first report and/or the priority value of the second report based on the foregoing first parameter, so as to determine the priority of the first report and/or the priority of the second report. When generating the UCI, the terminal can determine the arrangement sequence of the content of the first report and/or the content of the second report based on the priority of the first report and/or the priority of the second report, to generate the UCI, thereby guaranteeing orderliness of UCI content mapping.

Optionally, in this embodiment of this application, in a case that at least two first reports conflict, and the at least two conflicting first reports include at least one semi-persistent first report whose reporting resource is a PUSCH and at least one semi-persistent first report whose reporting resource is a PUCCH, the terminal skips transmitting the at least one semi-persistent first report whose reporting resource is the PUCCH. In a case that the reporting resources associated with the at least two first reports overlap in time domain and belong to a same component carrier in frequency domain, the at least two first reports conflict.

In this way, how the terminal transmits conflicting first reports when a plurality of (two or more) first reports conflict, and the plurality of conflicting first reports include at least one semi-persistent first report whose reporting resource is a PUSCH and at least one semi-persistent first report whose reporting resource is a PUCCH is effectively defined, to guarantee orderliness of UCI mapping. It may be understood that, according to the first priority rule, the priority of the semi-persistent first report whose reporting resource is the PUSCH is higher than the priority of the semi-persistent first report whose reporting resource is the PUCCH. If the two types of first reports conflict, the terminal may discard the semi-persistent first report whose reporting resource is the PUCCH and whose priority is low, and transmit the semi-persistent first report whose reporting resource is the PUSCH and whose priority is high. As a result, transmission of a more important first report with a higher priority is preferentially ensured in a case that a reporting resource carrying capability is limited.

Optionally, the method provided in this embodiment of this application may further include:

In a case that at least two first reports conflict, the method further includes:

The terminal performs transmission according to a preset rule, where the preset rule includes at least one of the following:

The terminal performs first transmission based on priorities of the at least two first reports in a case that both time-domain reporting characteristics and reporting resource types of the at least two conflicting first reports are the same, where the first transmission includes discarding or multiplexing; and

the terminal skips, in a case that the time-domain reporting characteristics or the reporting resource types of the at least two conflicting first reports are different, sending a first report with a low priority in the plurality of conflicting first reports if a first case is not satisfied.

The first case is that the at least two first reports include at least one semi-persistent first report whose reporting resource is a PUSCH and at least one semi-persistent first report whose reporting resource is a PUCCH.

In a case that reporting resources associated with the at least two first reports overlap in time domain and belong to a same component carrier in frequency domain, the at least two first reports conflict.

Optionally, the method provided in this embodiment of this application may further include:

The terminal performs transmission according to a first preset rule in a case that the first report and the second report conflict.

The first preset rule includes at least one of the following:

The terminal skips reporting the second report if the first report is a semi-persistent report whose reporting resource is a PUSCH and the second report is a semi-persistent report whose reporting resource is a PUCCH;

the terminal skips reporting a report with a lower priority in the first report and the second report if the first report is a semi-persistent report whose reporting resource is a PUCCH and the second report is a semi-persistent report whose reporting resource is a PUSCH;

the terminal performs first transmission based on priorities of the first report and the second report if a time-domain reporting characteristic and a reporting resource type that correspond to the first report are the same as a time-domain reporting characteristic and a reporting resource type that correspond to the second report, where the first transmission is multiplexing or discarding; and

the terminal skips reporting the report with the lower priority in the first report and the second report if the time-domain reporting characteristic or the reporting resource type that corresponds to the first report is different from the time-domain reporting characteristic or the reporting resource type that corresponds to the second report and if a second case is not satisfied.

The second case is that the first report is a semi-persistent report whose reporting resource is a PUCCH and the second report is a semi-persistent report whose reporting resource is a PUSCH, or the first report is a semi-persistent report whose reporting resource is a PUSCH and the second report is a semi-persistent report whose reporting resource is a PUCCH. In a case that a reporting resource associated with the first report and a reporting resource associated with the second report overlap in time domain and belong to a same component carrier in frequency domain, the first report and the second report conflict.

In this embodiment of this application, if the first report and the second report conflict, the terminal may determine a reporting behavior of the terminal according to the time-domain reporting characteristics and reporting resources of the first report and the second report.

It should be noted that the terminal skips reporting the second report, or skips reporting the report with a lower priority in the first report and the second report. For example, the report may be discarded, that is, the UCI reported by the terminal does not include content of the second report or the report with the lower priority. Further, orderliness of UCI mapping can be effectively guaranteed. In addition, when reporting resources corresponding to reported information overlap, the terminal can select more important reported information with a higher priority for reporting, to provide important reference information for scheduling and transmission on the network side.

Optionally, in this embodiment of this application, that the terminal arranges the content of the first report based on the priority to generate the UCI, and transmits the UCI on the target resource includes any one of the following:

the terminal arranges a plurality of target reports in descending order of priority based on priorities of the target reports in a case that the target resource is capable of carrying the plurality of conflicting target reports, to generate the UCI, and transmits the UCI on the target resource; and

the terminal arranges the plurality of target reports in descending order of priority based on the priorities of the target reports in a case that the target resource is incapable of carrying the plurality of conflicting target reports, to generate first UCI, truncates second UCI of a preset length from the first UCI by taking the target report as a unit, and transmits the second UCI on the target resource, where the preset length is related to a carrying capability of the target resource.

The plurality of conflicting target reports are at least two conflicting first reports, reporting resources associated with the at least two first reports overlap in time domain and belong to a same component carrier in frequency domain, and no semi-persistent report whose reporting resource is a PUSCH and no semi-persistent report whose reporting resource is a PUCCH exist in the at least two first reports.

The plurality of conflicting target reports include a first report and a second report, a reporting resource associated with the first report and a reporting resource associated with the second report overlap in time domain and belong to a same component carrier in frequency domain, and reporting resource types corresponding to the first report and the second report are the same.

In this embodiment of this application, if a plurality of conflicting target reports exist, the terminal can determine an arrangement sequence of the plurality of conflicting target reports based on whether the target resource is capable of carrying the plurality of conflicting target reports, to generate the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side.

If the target resource is incapable of carrying the plurality of conflicting target reports, the terminal arranges the conflicting target reports in descending order of priority based on the priorities of the target reports, to generate the first UCI, then truncates the second UCI of the preset length from the first UCI by taking the target report as a unit, and reports the second UCI. The second UCI is a part of the first UCI. For example, it is assumed that a quantity of target reports is five, the five conflicting target reports are arranged in descending order of priority to generate first UCI, and if the target resource is capable of carrying three reports but is incapable of carrying four reports, report content included in the truncated second UCI is content of first three target reports that are arranged in the first UCI. In this implementation, because the target resource is incapable of carrying the plurality of conflicting target reports, a target report with a high priority can be reported, and a target report with a low priority cannot be reported. For example, the target report with the low priority may be discarded, to ensure that the target report with the high priority can be reported to the network side, thereby providing important reference information for scheduling and transmission on the network side.

The plurality of conflicting target reports may include a first report and a second report. In this case, reporting resource types corresponding to the first report and the second report are the same, for example, are both PUCCHs or PUSCHs.

For example, the following describes a calculation method for the priority of the first report in this embodiment of this application through specific implementations.

Implementation I:

It is assumed that the first report is an LTM report. For LTM reports that currently supports only SSB-based (SSB-based) L1-RSRP measurement and reporting, a priority calculation method of the LTM report may be expressed as follows:

$$\mathrm{Pr}\, i_{LTM}(y,c,l) = 2 \cdot N_{cells} \cdot M_l \cdot y + M_l \cdot c + l$$

where

for an aperiodic LTM report reported on a PUSCH, $y=0$; for a semi-persistent LTM report reported on a PUSCH, $y=1$; for a semi-persistent LTM report reported on a PUCCH, $y=2$; and for an LTM report reported on a PUCCH, $y=3$; $c$ denotes a serving cell index that is associated with a reporting resource corresponding to the LTM report, $N_{cells}$ is a value of an RRC parameter maxNrofServingCells; and $l$ denotes an identifier configured to the LTM report, a value range of $l$ is from 0 to $M_l-1$ (including 0 and $M_l-1$), and $M_l$ denotes a maximum quantity of LTM reporting configurations configured by a network.

Optionally, the following content may further be added to the foregoing priority calculation formula:

(1) An impact factor indicating whether the LTM report carries a measurement result of a current serving object is introduced. When the LTM report is configured by the RRC parameter to be required to carry the measurement result of the current serving object, a value of the impact factor is 0; or when the LTM report is not required to carry the measurement result of the current serving object based on RRC parameter configuration, the value of the impact factor is 1. Further, by reporting the measurement result of the current serving object, the network side can more accurately determine whether to perform a handover, which can effectively eliminate the impact of ping-pong (namely, frequent handover between cells).

(2) An impact factor indicating whether the LTM report carries an inter-frequency measurement result is introduced. When the LTM report is configured by the RRC parameter to be required to carry the inter-frequency measurement result, a value of the impact factor is 0; or when the LTM report is not required to carry the inter-frequency measurement result based on the RRC parameter, the value of the impact factor is 1. Further, by reporting a beam measurement result of an inter-frequency cell, the network side can select a better target cell.

(3) An impact factor indicating whether the LTM report is associated with an inter-frequency measurement resource is introduced. When at least one inter-frequency measurement resource exists in a measurement resource associated with the LTM report, a value of the impact factor is 0; or when no inter-frequency measurement resource exists in the measurement resource associated with the LTM report, the value of the impact factor is 1.

(4) An impact factor indicating a reported measurement quantity of the LTM report is introduced. When the reported measurement quantity is an L1-RSRP or an L1-SINR, a value of the impact factor is 0; or when the reported measurement quantity is neither the L1-RSRP nor the L1-SINR, the value of the impact factor is 1.

(5) An impact pact indicating a magnitude of a measurement result included in the LTM report is introduced. There may be N different thresholds specified by a protocol or configured by a network. When a first measurement value corresponding to the measurement result included in the LTM report satisfies a threshold, a value of a corresponding impact factor may be determined. For example, three thresholds are set and a magnitude relationship is x1 > x2 > x3. When the first measurement value corresponding to the measurement result included in the LTM report is between x1 and x2, the value of the impact factor is 1; when the first measurement value is greater than x1, the value of the impact factor is 0; or when the first measurement value is less than x3, the value of the impact factor is 2. The first measurement value corresponding to the measurement result included in the LTM report includes at least one of the following:

> a minimum measurement value in the measurement result included in the LTM report;
> a maximum measurement value in the measurement result included in the LTM report; and
> a linear average value of measurement values corresponding to all measurement results included in the LTM report.

In this implementation, a priority value is obtained according to the foregoing priority calculation formula. A smaller priority value indicates a higher priority of a corresponding LTM report.

For the LTM report, a corresponding priority value is calculated according to the method in the implementation I, and for a CSI report, a corresponding priority value is calculated according to an existing priority value calculation formula. When the LTM report and the CSI report conflict, the terminal preferentially reports a report with a smaller priority value. When the priority values respectively corresponding to the LTM report and the CSI report are the same, the terminal determines priorities of the LTM report and the CSI report based on first indication information, and preferentially reports a report with a higher priority. The first indication information is configured or indicated by a network.

Implementation II:

When the network side configures both LTM-ReportConfig and CSI-ReportConfig, priorities of an LTM report and a CSI report are determined according to any one of the following rules:

> 1. Priorities of LTM reports are all higher than priorities of CSI reports.
> 2. Priority values of the LTM report and the CSI report are respectively calculated according to the following priority calculation formula:

$$\Pr i_{CSI}(y, k, c, s) = 2 \cdot N_{cells} \cdot M_s \cdot y + N_{cells} \cdot M_s \cdot k + M_s \cdot c + s$$

where
$M_s$ denotes a maximum quantity of target reporting configurations that can be configured to the current serving cell of the terminal, the target reporting configuration includes an LTM reporting configuration and a CSI reporting configuration, and an identifier value of the LTM reporting configuration is (0, $M_l$ - 1), $M_l$ denotes a maximum quantity of LTM reporting configurations configured by the RRC, and an identifier value of the CSI reporting configuration is ($M_l$, $M_s$ - 1).

For an LTM report whose reported quantity is an L1-RSRP or an L1-SINR, $k$ =0; for an LTM report whose reported quantity is neither an L1-RSRP nor an L1-SINR, $k$ =1; for a CSI report whose reported quantity is an L1-RSRP or an L1-SINR, $k$ =2; for a CSI report whose reported quantity is neither an L1-RSRP nor an L1-SINR, $k$ =3; $M_s$ denotes the maximum quantity of target reporting configurations that can be configured to the current serving cell of the terminal; and $s$ denotes a target configuration identifier. The target reporting configuration includes an LTM reporting configuration or a CSI reporting configuration.

For an aperiodic LTM report whose reporting resource is a PUSCH, $y$ =0; for a semi-persistent LTM report whose reporting resource is a PUSCH, $y$ =1; for a semi-persistent LTM report whose reporting resource is a PUCCH, $y$ =2; for a periodic LTM report whose reporting resource is a PUCCH, $y$ =3; for an aperiodic CSI report whose reporting resource is a PUSCH, $y$ =4; for a semi-persistent CSI report whose reporting resource is a PUSCH, $y$ =5; for a semi-persistent CSI report whose reporting resource is a PUCCH, $y$ =6; for a periodic CSI report whose reporting resource is a PUCCH, $y$ =7; $M_s$ denotes the maximum quantity of target reporting configurations that can be configured to the current serving cell of the terminal; and $s$ denotes the target configuration identifier. The target reporting configuration includes an LTM reporting configuration or a CSI reporting configuration.

In this implementation, the priority values of the LTM report and the CSI report are respectively calculated according to the foregoing priority calculation formula and information such as the LTM reporting configuration and the CSI reporting configuration. A smaller priority value indicates a higher priority. If the priority values of the LTM report and the CSI report are the same, the terminal considers the LTM report to have a higher priority than the CSI report, or the terminal considers the CSI report to have a higher priority than the LTM report, or the terminal determines, based on first indication information, whether the priority of the LTM report is higher than that of the CSI report. The first indication information is configured or indicated by a network.

Implementation III:

Priority values of a plurality of LTM reports, a priority value of a conventional CSI report (that is, the second report in the foregoing method embodiments), and priority values of an LTM report and a conventional CSI report (a higher priority value indicates a lower priority) are respectively calculated according to the following priority calculation formula:

$$\mathrm{Pri}_{CSI}(l,y,k,c,s){=}8\cdot N_{cells}\cdot M_s\cdot l+2\cdot N_{cells}\cdot M_s\cdot y+N_{cells}\cdot M_s\cdot k+M_s\cdot c+s$$

The parameters in the priority calculation formula are specifically defined as follows:
$M_s$ denotes a maximum quantity of target reporting configurations that can be configured to the current serving cell of the terminal. The target reporting configuration includes an LTM reporting configuration or a CSI reporting configuration. When the target reporting configuration is an LTM reporting configuration, an identifier value of the LTM reporting configuration is $(0, M_l$-1), $M_s=M_l$, and s denotes a target LTM reporting configuration identifier. When the target reporting configuration is a CSI reporting configuration, an identifier value of the CSI reporting configuration is $(0, M_t$-1), $M_s=M_t$, and s denotes a target CSI reporting configuration identifier.

For an LTM report whose reported quantity is an L1-RSRP or an L1-SINR, and a CSI report whose reported quantity is an L1-RSRP or an L1-SINR, $k=0$; and for an LTM report whose reported quantity is neither an L1-RSRP nor the L1-SINR, and a CSI report whose reported quantity is neither an L1-RSRP nor an L1-SINR, $k=1$.

$N_{cells}$ denotes a maximum quantity of serving cells that can be configured in a cell group in which the current serving cell of the terminal is located. When the target reporting configuration is an LTM reporting configuration, c denotes a serving cell identifier corresponding to a target LTM report; or when the target reporting configuration is a CSI reporting configuration, c denotes a serving cell identifier corresponding to a target CSI report.

For an aperiodic LTM report or CSI report whose reporting resource is a PUSCH, $y=0$; for a semi-persistent LTM report or CSI report whose reporting resource is a PUSCH, $y=1$; for a semi-persistent LTM report or CSI report whose reporting resource is a PUCCH, $y=2$; and for a periodic LTM report or CSI report whose reporting resource is a PUCCH, $y=3$.

A first impact factor $l$ is used for distinguishing an LTM report from a conventional CSI report. A value of $l$ is 0 or 1, and the network side configures (the RRC parameter) or indicates (a MAC CE or a DCI indication) whether a priority of the LTM report is higher or a priority of the conventional CSI report is higher. After the terminal receives configuration information or indication information indicating that the priority of the LTM report is higher, for the LTM report, $l=0$; and for the conventional CSI report, $l=1$. After the terminal receives configuration information or indication information indicating that the priority of the conventional CSI report is higher, for the LTM report, $l=1$; and for the conventional CSI report, $l=0$. For the network side, when determining that a cell handover is about to occur for the terminal, the network side sends the configuration information or indication information indicating that the LTM report has the higher priority to the terminal. When determining that the terminal works operates in a good working condition within the current serving cell, the network side sends the configuration information or indication information indicating that the conventional CSI report has the higher priority to the terminal.

Optionally, the following content may further be added to the priority calculation formula:

(1) An impact factor indicating whether a third report carries a measurement result of the current serving object is introduced. When the third report is configured by the RRC parameter to be required to carry the measurement result of the current serving object, a value of the impact factor is 0; or when the third report is not required to carry the measurement result of the current serving object based on RRC parameter configuration, the value of the impact factor is 1.

(2) An impact factor indicating whether the third report carries an inter-frequency measurement result is introduced. When the third report is configured by the RRC parameter to be required to carry the inter-frequency measurement result, a value of the impact factor is 0; or when the third report is not required to carry the inter-frequency measurement result based on the RRC parameter, the value of the impact factor is 1.

(3) An impact factor indicating whether the third report is associated with an inter-frequency measurement resource is introduced. When at least one inter-frequency measurement resource exists in a measurement resource associated with the third report, a value of the impact factor is 0; or when no inter-frequency measurement resource exists in the measurement resource associated with the third report, the value of the impact factor is 1.

(4) An impact factor indicating a magnitude of a measurement result included in the third report is introduced. There may be N different thresholds specified by a protocol or configured by a network. When a first measurement value corresponding to the measurement result included in the third report satisfies a threshold, a value of a corresponding impact factor may be determined. For example, three thresholds are set and a magnitude relationship is $x1 > x2 > x3$. When the first measurement value corresponding to the measurement result included in the LTM report is between $x1$ and $x2$, the value of the impact factor is 1; when the first measurement value is greater than $x1$, the value of the impact factor is 0; or when the first measurement value is less than $x3$, the value of the impact factor is 2. The first measurement value corresponding to the measurement result included in the third report includes at least one of the following:

a minimum measurement value in the measurement result included in the third report;

a maximum measurement value in the measurement result included in the third report; and

a linear average value of measurement values corresponding to all measurement results included in the third report.

The foregoing third report includes at least one of an LTM report and a conventional CSI report.

In this implementation, a lower calculated priority value indicates a higher corresponding priority.

A priority value of the third report is calculated according to the foregoing implementation. When a plurality of third reports conflict, report content reported by the terminal may be determined based on priority values. For example, the following illustrates how the terminal processes a plurality of conflicting third reports and performs reporting below by using specific implementations.

Implementation I:

When the plurality of third reports conflict, the terminal performs transmission according to a second preset rule. The second preset rule is specifically as follows:

If y values corresponding to the plurality of conflicting third reports are different, except in a first case, the terminal skips transmitting a third report with a large priority value in the plurality of conflicting third reports.

(a.) The first case includes at least one of the following:

i. The plurality of conflicting third reports include at least one first report and at least one second report, a y value of at least one first report is 2, and a y value of at least one second report is 3; or a y value of at least one first report is 3, and a y value of at least one second report is 2;

ii. the plurality of conflicting third reports are all first reports, a y value of at least one report of the plurality of conflicting third reports is 2, and a y value of at least one report of the plurality of conflicting third reports is 3; and

iii. the plurality of conflicting third reports are all second reports, a y value of at least one report of the plurality of conflicting second reports is 2, and a y value of at least one report of the plurality of conflicting second reports is 3.

Otherwise (i.e., if the y values corresponding to the plurality of conflicting third reports are the same), the terminal performs first transmission based on the priority values of the plurality of conflicting third reports. The first transmission includes at least one of discarding or multiplexing.

Refer to FIG. 3. FIG. 3 is a flowchart of another transmission method according to an embodiment of this application. The method is applied to a network-side device. As shown in FIG. 3, the method may include the following steps:

Step 301: The network-side device receives UCI reported by a terminal, where the UCI includes content of a first report arranged based on a priority of the first report, and the priority of the first report is determined according to a first priority rule.

The first report includes at least one measurement result associated with a first object, and the first object is an object different from a current serving object of the terminal.

Optionally, the method further includes:

The network-side device indicates or configures first indication information to the terminal, where the first indication information indicates whether the priority of the first report is higher than or lower than a priority of a second report, and a type of the first report is the same as a type of the second report.

In this embodiment of this application, the terminal determines the priority of the first report according to the first priority rule; and arranges the content of the first report based on the priority to generate the UCI, and reports the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side, thereby effectively improving transmission performance of the network-side device and the terminal.

It should be noted that the transmission method that is applied to the network-side device and is provided in this embodiment of this application corresponds to the foregoing transmission method applied to the terminal side. For related concepts and specific implementations in this embodiment of this application, refer to the descriptions in the foregoing method embodiments applied to the terminal side. Details are not described herein again.

The transmission method provided in this embodiment of this application may be performed by a transmission apparatus. In this embodiment of this application, the transmission apparatus provided in this embodiment of this application is described by using an example in which the transmission method is performed by the transmission apparatus.

Refer to FIG. 4. FIG. 4 is a structural diagram of a transmission apparatus according to an embodiment of this application. The apparatus is applied to a terminal. As shown in FIG. 4, a transmission apparatus 400 includes:

a determination module 401, configured to determine a priority of a first report according to a first priority rule; and

a transmission module 402, configured to arrange content of the first report based on the priority to generate UCI, and transmit the UCI on a target resource.

The first report includes at least one measurement result associated with a first object, and the first object is an object different from a current serving object of the terminal.

Optionally, the first priority rule is related to at least one of the following:

a time-domain reporting characteristic corresponding to a third report;
a reported measurement quantity corresponding to the third report;
a reporting resource corresponding to the third report;
a serving cell identifier associated with the third report;
a reporting configuration identifier corresponding to the third report;
a measurement result carried in the third report;
a measurement resource associated with the third report;
a priority value of the third report; and
first indication information, where the first indication information indicates the priority of the first report, and the first indication information is configured or indicated by a network-side device.

The third report includes at least one of the first report and a second report.

Optionally, in a case that the first priority rule is related to the time-domain reporting characteristic corresponding to the third report, the first priority rule includes at least one of the following:

a priority of an aperiodic first report is higher than a priority of a semi-persistent first report;
the priority of the aperiodic first report is higher than a priority of a periodic first report; and
the priority of the semi-persistent first report is higher than the priority of the periodic first report.

Optionally, in a case that the first priority rule is related to the reported measurement quantity corresponding to the third report, the first priority rule includes at least one of the following:

a priority of a first report whose reported measurement quantity is a first measurement quantity is higher than a priority of a first report whose reported measurement quantity is not the first measurement quantity;
a priority of a second report whose reported measurement quantity is the first measurement quantity is higher than the priority of the first report whose reported measurement quantity is not the first measurement quantity; and
the priority of the first report whose reported measurement quantity is the first measurement quantity is higher than a priority of a second report whose reported measurement quantity is not the first measurement quantity.

The first measurement quantity is a layer 1 reference signal received power L1-RSRP or a layer 1 signal to interference plus noise ratio L1-SINR.

Optionally, in a case that the first priority rule is related to the time-domain reporting characteristic and the reporting resource that correspond to the third report, the first priority rule includes at least one of the following:

a priority of a semi-persistent first report whose reporting resource is a physical uplink shared channel PUSCH is higher than a priority of a semi-persistent first report whose reporting resource is a physical uplink control channel PUCCH;

a priority of an aperiodic first report is higher than a priority of a semi-persistent second report whose reporting resource is a PUSCH;

a priority of an aperiodic second report is higher than the priority of the semi-persistent first report whose reporting resource is the PUSCH;

the priority of the semi-persistent first report whose reporting resource is the PUSCH is higher than a priority of a semi-persistent second report whose reporting resource is a PUCCH;

the priority of the semi-persistent second report whose reporting resource is the PUSCH is higher than the priority of the semi-persistent first report whose reporting resource is the PUCCH;

the priority of the semi-persistent second report whose reporting resource is the PUCCH is higher than a priority of a periodic first report; and

the priority of the semi-persistent first report whose reporting resource is the PUCCH is higher than a priority of a periodic second report.

Optionally, in a case that the first priority rule is related to the serving cell identifier associated with the third report, the first priority rule includes at least one of the following:

a smaller serving cell identifier associated with a first report indicates a higher priority of the first report; and

in the first report and the second report that are associated with different serving cell identifiers, a report associated with a smaller serving cell identifier has a higher priority.

Optionally, in a case that the first priority rule is related to the reporting configuration identifier corresponding to the third report, the first priority rule includes at least one of the following:

a smaller reporting configuration identifier corresponding to a first report indicates a higher priority of the first report; and

in the first report and the second report that are associated with different reporting configuration identifiers, a report with a smaller reporting configuration identifier has a higher priority.

Optionally, in a case that the first priority rule is related to the measurement result carried in the third report, the first priority rule includes at least one of the following:

a priority of a first report that carries a measurement result of a current serving object is higher than a priority of a first report that does not carry the measurement result of the current serving object; and

a priority of a first report that carries at least one measurement result of a first object associated with a second frequency point is higher than a priority of a first report that carries only a measurement result of a first object associated with a first frequency point, where the first frequency point is a frequency point at which the current serving object of the terminal is located, and the second frequency point is a frequency point different from the first frequency point.

Optionally, in a case that the first priority rule is related to the measurement resource associated with the third report, the first priority rule includes:

a priority of a first report that is associated with at least one measurement resource associated with a second frequency point is higher than a priority of a first report that is associated with a measurement resource only associated with a first frequency point, where the first frequency point is a frequency point at which the current serving object of the terminal is located, and the second frequency point is a frequency point different from the first frequency point.

Optionally, in a case that the third report includes the first report and the second report, the first indication information indicates whether the priority of the first report is higher than or lower than a priority of the second report. A type of the first report is the same as a type of the second report.

Optionally, in a case that the first priority rule is related to the priority value of the third report, the first priority rule includes at least one of the following:

a priority of a first report is related to a priority value of the first report, and a smaller priority value indicates a higher priority of a corresponding first report; and

in the first report and the second report that are associated with different priority values, a report with a smaller priority value has a higher priority.

Optionally, the second report satisfies at least one of the following:

the second report is associated with only a measurement resource of the current serving object of the terminal; and the second report is associated with at least one measurement resource of a second object, where the second object is different from the current serving object of the terminal, and configuration information of the measurement resource of the second object is included in configuration information of the current serving object of the terminal.

Optionally, the determination module 401 is further configured to:
determine a priority value of the third report based on a first parameter.

The first parameter includes at least one of the following:

first information, where the first information indicate whether the priority of the first report is higher than a priority of the second report, and the first information is configured or indicated by a network; and
the time-domain reporting characteristic and the reporting resource that correspond to the third report;
the reported measurement quantity corresponding to the third report;
the serving cell identifier associated with the third report; and
the reporting configuration identifier corresponding to the third report.

Optionally, the first report is a beam report or a CSI report; and the second report is a beam report or a CSI report.

Optionally, in a case that at least two first reports conflict, and the at least two conflicting first reports include at least one semi-persistent first report whose reporting resource is a PUSCH and at least one semi-persistent first report whose reporting resource is a PUCCH, the transmission module skips transmitting the at least one semi-persistent first report whose reporting resource is the PUCCH.

In a case that reporting resources associated with the at least two first reports overlap in time domain and belong to a same component carrier in frequency domain, the at least two first reports conflict.

Optionally, the transmission module 402 is further configured to perform transmission according to a preset rule in a case that at least two first reports conflict, where the preset rule includes at least one of the following:

performing first transmission based on priorities of the at least two first reports in a case that both time-domain reporting characteristics and reporting resource types of the at least two conflicting first reports are the same, where the first transmission includes discarding or multiplexing; and
skipping, in a case that the time-domain reporting characteristics or the reporting resource types of the at least two conflicting first reports are different, sending a first report with a low priority in the plurality of conflicting first reports if a first case is not satisfied.

The first case is that the at least two first reports include at least one semi-persistent first report whose reporting resource is a PUSCH and at least one semi-persistent first report whose reporting resource is a PUCCH.

In a case that reporting resources associated with the at least two first reports overlap in time domain and belong to a same component carrier in frequency domain, the at least two first reports conflict.

Optionally, the transmission module 402 is further configured to:
perform transmission according to a first preset rule in a case that the first report and the second report conflict.

The first preset rule includes at least one of the following:

skipping reporting the second report if the first report is a semi-persistent report whose reporting resource is a PUSCH and the second report is a semi-persistent report whose reporting resource is a PUCCH;
skipping reporting a report with a lower priority in the first report and the second report if the first report is a semi-persistent report whose reporting resource is a PUCCH and the second report is a semi-persistent report whose reporting resource is a PUSCH;
the terminal performs first transmission based on priorities of the first report and the second report if a time-domain reporting characteristic and a reporting resource type that correspond to the first report are the same as a time-domain reporting characteristic and a reporting resource type that correspond to the second report, where the first transmission is multiplexing or discarding; and
the terminal skips reporting the report with the lower priority in the first report and the second report if the time-domain reporting characteristic or the reporting resource type that corresponds to the first report is different from the time-domain reporting characteristic or the reporting resource type that corresponds to the second report and if a second case is not satisfied.

The second case is that the first report is a semi-persistent report whose reporting resource is a PUCCH and the second report is a semi-persistent report whose reporting resource is a PUSCH, or the first report is a semi-persistent report whose reporting resource is a PUSCH and the second report is a semi-persistent report whose reporting resource is a PUCCH.

In a case that a reporting resource associated with the first report and a reporting resource associated with the second report overlap in time domain and belong to a same component carrier in frequency domain, the first report and the second report conflict.

Optionally, the transmission module 402 is further configured to perform at least one of the following:

arrange a plurality of target reports in descending order of priority based on priorities of the target reports in a case that the target resource is capable of carrying the plurality of conflicting target reports, to generate the UCI, and transmit the UCI on the target resource; and

arrange the plurality of conflicting target reports in descending order of priority based on the priorities of the target reports in a case that the target resource is incapable of carrying the plurality of conflicting target reports, to generate first UCI, truncate second UCI of a preset length from the first UCI by taking the target report as a unit, and transmit the second UCI on the target resource, where the preset length is related to a carrying capability of the target resource.

The plurality of conflicting target reports are at least two conflicting first reports, reporting resources associated with the at least two first reports overlap in time domain and belong to a same component carrier in frequency domain, and no semi-persistent report whose reporting resource is a PUSCH and no semi-persistent report whose reporting resource is a PUCCH exist in the at least two first reports.

The plurality of conflicting target reports include a first report and a second report, a reporting resource associated with the first report and a reporting resource associated with the second report overlap in time domain and belong to a same component carrier in frequency domain, and reporting resource types corresponding to the first report and the second report are the same.

In this embodiment of this application, the terminal can determine the priority of the first report according to the first priority rule; and arrange the content of the first report based on the priority to generate the UCI, and report the UCI. Further, the content of the first report is arranged based on the priority of the first report to generate the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side.

The transmission apparatus in this embodiment of this application may be an electronic device, such as an electronic device having an operating system, or may be a component in an electronic device, such as an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like. This is not specifically limited in this embodiment of this application.

The transmission apparatus provided in this embodiment of this application can implement all processes implemented by the method embodiment in FIG. 2 and the same technical effects are achieved. To avoid repetition, details are not described herein again.

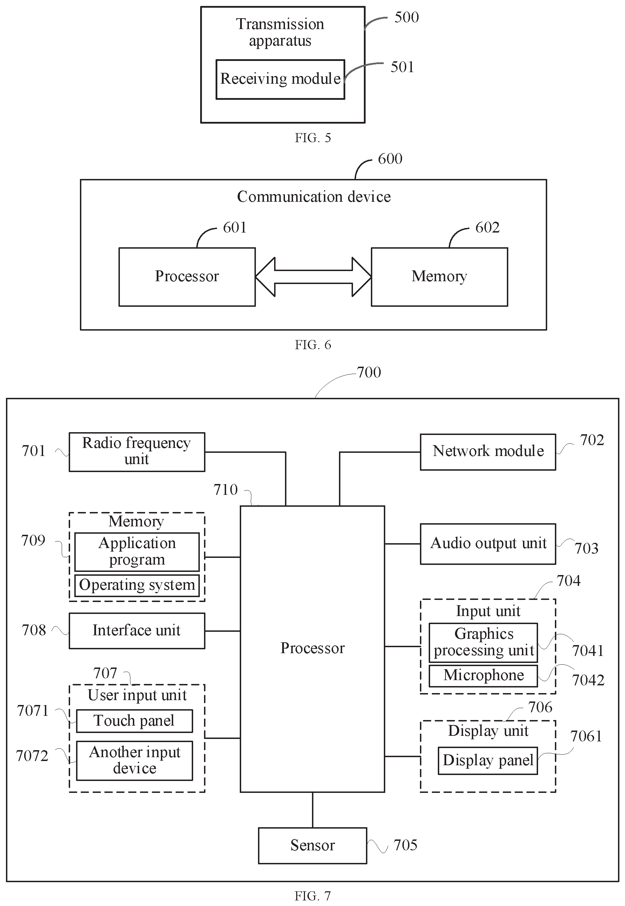

Refer to FIG. 5. FIG. 5 is a structural diagram of a transmission apparatus according to an embodiment of this application. The apparatus is applied to a network-side device. As shown in FIG. 5, a transmission apparatus 500 includes: a receiving module 501, configured to receive UCI reported by a terminal, where the UCI includes content of a first report arranged based on a priority of the first report, and the priority of the first report is determined according to a first priority rule.

The first report includes at least one measurement result associated with a first object, and the first object is an object different from a current serving object of the terminal.

Optionally, the apparatus further includes:

an execution module, configured to indicate or configure first indication information to the terminal, where the first indication information indicates whether the priority of the first report is higher than or lower than a priority of a second report, and a type of the first report is the same as a type of the second report.

The transmission apparatus provided in this embodiment of this application can implement all processes implemented by the method embodiment in FIG. 3 and the same technical effects are achieved. To avoid repetition, details are not described herein again.

As shown in FIG. 6, an embodiment of this application further provides a communication device 600, including a processor 601 and a memory 602. The memory 602 stores a program or instructions runnable on the processor 601. For example, when the communication device 600 is a terminal, the program or instructions are executed by the processor 601 to implement the steps of the foregoing transmission method embodiments, and the same technical effects can be achieved. When the communication device 600 is a network-side device, the program or instructions are executed by the processor 601 to implement the steps of the foregoing transmission method embodiments, and the same technical effects can be achieved. To avoid repetition, details are not described herein again.

An embodiment of this application further provides a terminal, including a processor and a communication interface. The communication interface is coupled to the processor, and the processor is configured to run a program or instructions, to implement the steps in the method embodiment shown in FIG. 2. This terminal embodiment corresponds to the foregoing terminal-side method embodiments, and each implementation process and implementation of the foregoing method embodiments can be applied to the terminal embodiment, and the same technical effects can be achieved. Specifically, FIG. 7 is a diagram of a hardware structure of a terminal according to an embodiment of this application.

A terminal 700 includes, but is not limited to, at least some components of a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the terminal 700 may further include a power supply (such as a battery) that supplies power to each component. The power supply may be logically connected to the processor 710 through a power management system, so that functions, such as charging management, discharging management, and power consumption management, are implemented through the power management system. The terminal structure shown in FIG. 7 does not constitute a limitation to the terminal. The terminal may include more or fewer components than those shown in the figure, or some components may be combined, or different component arrangements may be used. Details are not described herein again.

It should be understood that, in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition device (such as a camera) in a video acquisition mode or an image acquisition mode. The display unit 706 may include a display panel 7061. The display panel 7061 may be configured by using a liquid crystal display, an organic light-emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but is not limited to, a physical keyboard, a functional key (such as a volume control key or a switch key), a track ball, a mouse, and a joystick. Details are not described herein again.

In this embodiment of this application, after receiving downlink data from a network-side device, the ratio frequency unit 701 may transmit the downlink data to the processor 710 for processing. In addition, the radio frequency unit 701 may send uplink data to the network-side device. Generally, the radio frequency unit 701 includes, but is not limited to, an antenna, an amplifier, a transceiver, a coupler, a low noise amplifier, a duplexer, and the like.

The memory 709 may be configured to store a software program or instructions and various data. The memory 709 may mainly include a first storage area that stores a program or instructions and a second storage area that stores data. The first storage area may store an operating system, an application program or instructions required for at least one function (such as a sound playback function or an image playback function), and the like. In addition, the memory 709 may include a volatile memory or a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (static RAM, SRAM), a dynamic RAM (dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synchlink DRAM (Synchlink DRAM, SLDRAM), or a direct rambus RAM (Direct Rambus RAM, DRRAM). In this embodiment of this application, the memory 709 includes, but is not limited to, these memories and any other memory of a suitable type.

The processor 710 may include one or more processing units. Optionally, the processor 710 integrates an application processor and a modem processor. The application processor mainly processes s involving an operating system, a user interface, an application program, and the like. The modem processor mainly processes a wireless communication signal, and is, for example, a baseband processor. It may be understood that the foregoing modem processor may not be integrated into the processor 710.

The processor 710 is configured to determine a priority of a first report according to a first priority rule; and arrange content of the first report based on the priority to generate UCI.

The radio frequency unit 701 is configured to transmit the UCI on a target resource.

The first report includes at least one measurement result associated with a first object, and the first object is an object different from a current serving object of the terminal.

In this embodiment of this application, the terminal determines the priority of the first report according to the first priority rule; and arranges the content of the first report based on the priority to generate the UCI, and reports the UCI. Further, the content of the first report is arranged based on the priority of the first report to generate the UCI, thereby guaranteeing orderliness of UCI mapping. In addition, when reporting resources corresponding to reported information overlap, the terminal can select more important reported information with a higher priority for reporting, to provide important reference information for scheduling and transmission on a network side, thereby guaranteeing orderliness of mapping the content of the first report to the UCI.

For the implementation process of each implementation described in this embodiment, refer to the related descriptions in the method embodiment shown in FIG. 2. Same or corresponding technical effects are achieved. To avoid repetition, details are not described herein again.

An embodiment of this application further provides a network-side device, including a processor and a communication interface. The communication interface is coupled to the processor, and the processor is configured to run a program or instructions, to implement the steps in the method embodiment shown in FIG. 3. This network-side device embodiment corresponds to the foregoing network-side device method embodiments. Each implementation process and implementation of the foregoing method embodiments can be applied to this network-side device embodiment, and the same technical effects can be achieved.

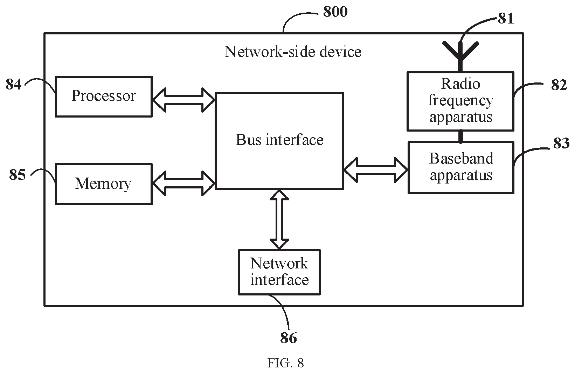

Specifically, an embodiment of this application further provides a network-side device. As shown in FIG. 8, a network-side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-transmitted information, and transmits the information to the radio frequency apparatus 82; and the radio frequency apparatus 82 processes the received information and then sends the information through the antenna 81.

The method performed by the network-side device in the foregoing embodiments may be implemented in the baseband apparatus 83. The baseband apparatus 83 includes a baseband processor.

The baseband apparatus 83 may, for example, include at least one baseband panel. A plurality of chips are arranged on the baseband panel. As shown in FIG. 8, one of the chips is, for example, the baseband processor, and is connected to the memory 85 through a bus interface, to invoke a program in the memory 85, so as to perform the operations performed by the network-side device shown in the foregoing method embodiments.

The network side device may further include a network interface 86. The interface is, for example, a common public radio interface (Common Public Radio Interface, CPRI).

Specifically, the network-side device 800 provided in this embodiment of this application further includes: instructions or a program that is stored in the memory 85 and that is runnable on the processor 84. The processor 84 invokes the instructions or the program in the memory 85 to perform the method performed by the modules shown in FIG. 5 and achieves the same technical effects. To avoid repetition, details are not described herein again.

An embodiment of this application further provides a readable storage medium. The readable storage medium stores a program or instructions. The program or instructions are executed by a processor to implement each process of the foregoing communication method embodiments, and the same technical effects can be achieved. To avoid repetition, details are not described herein again.

The processor is a processor in the terminal described in the foregoing embodiments. The readable storage medium includes a computer-readable storage medium, such as a computer read-only memory (Read-Only Memory, ROM), a random access memory (Random Access Memory, RAM), a magnetic disk, or an optical disk. In some examples, the readable storage medium may be a non-transitory readable storage medium.

An embodiment of this application further provides a chip. The chip includes a processor and a communication interface, the communication interface is coupled to the processor, and the processor is configured to run a program or instructions to implement each process of the foregoing transmission method embodiments. The same technical effects can be achieved. To avoid repetition, details are not described herein again.

It should be understood that the chip mentioned in this embodiment of this application may alternatively be referred to as a system level chip, a system chip, a chip system, a system on chip, or the like.

An embodiment of this application further provides a computer program/program product. The computer program/program product is stored in a storage medium, and the computer program/program product is executed by at least one processor to implement each process of the foregoing transmission method embodiments. The same technical effects can be achieved. To avoid repetition, details are not described herein again.

An embodiment of this application further provides a communication system, including: a terminal and a network-side device. The terminal may be configured to perform the steps of the foregoing transmission method corresponding to the terminal. The network-side device may be configured to perform the steps of the foregoing transmission method corresponding to the network-side device.

It should be noted that herein, the term "include", "comprise", or any other variants thereof are intended to encompass in a non-exclusive mode, so that a process, method, object, or apparatus including a series of elements not only includes those elements, but also includes other elements that are not explicitly listed, or elements that are inherent to such a process, method, object, or apparatus. Without more limitations, an element defined by a sentence "including one......" does not exclude existence of other same elements in the process, method, object, or apparatus including the element. In addition, it should be noted that a scope of the method and the apparatus in the implementations of this application is not limited to performing functions according to a sequence that is shown or discussed, but may further include performing functions in a substantially simultaneous manner or in a reversed sequence according to the functions involved. For example, the described method may be performed in a different order than a described order, and various steps may be added, omitted, or combined. In addition, features described with reference to some examples may be combined in other examples.

Through the description of the foregoing implementations, a person skilled in the art may clearly understand that the methods provided in the foregoing embodiments may be implemented by software and a necessary general hardware platform, or may be implemented by hardware. The computer software product is stored in a storage medium (such as an ROM, an RAM, a magnetic disk, or an optical disc) and includes several instructions for instructing a terminal or a network-side device to perform the methods described in the embodiments of this application.

Embodiments of this application are described above with reference to the accompanying drawings, but this application is not limited to the foregoing specific implementations. The foregoing specific implementations are only examples and not limitations. A person of ordinary skill in the art may make implementations in several forms under the teaching of this application without departing from the spirit of this application and the scope of protection of the claims, and such implementations all fall within the scope of protection of this application.

**Claims**

1. A transmission method, comprising:

   determining, by a terminal, a priority of a first report according to a first priority rule;
   arranging, by the terminal, content of the first report based on the priority to generate uplink control information UCI, and transmitting the UCI on a target resource, wherein
   the first report comprises at least one measurement result associated with a first object, and the first object is an object different from a current serving object of the terminal.

2. The method according to claim 1, wherein the first priority rule is related to at least one of the following:

   a time-domain reporting characteristic corresponding to a third report;
   a reported measurement quantity corresponding to the third report;
   a reporting resource corresponding to the third report;
   a serving cell identifier associated with the third report;
   a reporting configuration identifier corresponding to the third report;
   a measurement result carried in the third report;
   a measurement resource associated with the third report;
   a priority value of the third report; and
   first indication information, wherein the first indication information indicates the priority of the first report, and the first indication information is configured or indicated by a network-side device; and
   the third report comprises at least one of the first report and a second report.

3. The method according to claim 2, wherein in a case that the first priority rule is related to the time-domain reporting characteristic corresponding to the third report, the first priority rule comprises at least one of the following:

   a priority of an aperiodic first report is higher than a priority of a semi-persistent first report;
   the priority of the aperiodic first report is higher than a priority of a periodic first report; and
   the priority of the semi-persistent first report is higher than the priority of the periodic first report.

4. The method according to claim 2, wherein in a case that the first priority rule is related to the reported measurement quantity corresponding to the third report, the first priority rule comprises at least one of the following:

   a priority of a first report whose reported measurement quantity is a first measurement quantity is higher than a priority of a first report whose reported measurement quantity is not the first measurement quantity;
   a priority of a second report whose reported measurement quantity is the first measurement quantity is higher than the priority of the first report whose reported measurement quantity is not the first measurement quantity; and
   the priority of the first report whose reported measurement quantity is the first measurement quantity is higher than a priority of a second report whose reported measurement quantity is not the first measurement quantity; and
   the first measurement quantity is a layer 1 reference signal received power L1-RSRP or a layer 1 signal to interference plus noise ratio L1-SINR.

5. The method according to claim 2, wherein in a case that the first priority rule is related to the time-domain reporting characteristic corresponding to the third report and reporting resource corresponding to the third report, the first priority rule comprises at least one of the following:

a priority of a semi-persistent first report whose reporting resource is a physical uplink shared channel PUSCH is higher than a priority of a semi-persistent first report whose reporting resource is a physical uplink control channel PUCCH;
a priority of an aperiodic first report is higher than a priority of a semi-persistent second report whose reporting resource is a PUSCH;
a priority of an aperiodic second report is higher than the priority of the semi-persistent first report whose reporting resource is the PUSCH;
the priority of the semi-persistent first report whose reporting resource is the PUSCH is higher than a priority of a semi-persistent second report whose reporting resource is a PUCCH;
the priority of the semi-persistent second report whose reporting resource is the PUSCH is higher than the priority of the semi-persistent first report whose reporting resource is the PUCCH;
the priority of the semi-persistent second report whose reporting resource is the PUCCH is higher than a priority of a periodic first report; and
the priority of the semi-persistent first report whose reporting resource is the PUCCH is higher than a priority of a periodic second report.

6. The method according to claim 2, wherein in a case that the first priority rule is related to the serving cell identifier associated with the third report, the first priority rule comprises at least one of the following:

a smaller serving cell identifier associated with a first report indicates a higher priority of the first report; and
in the first report and the second report that are associated with different serving cell identifiers, a report associated with a smaller serving cell identifier has a higher priority.

7. The method according to claim 2, wherein in a case that the first priority rule is related to the reporting configuration identifier corresponding to the third report, the first priority rule comprises at least one of the following:

a smaller reporting configuration identifier corresponding to a first report indicates a higher priority of the first report; and
in the first report and the second report that are associated with different reporting configuration identifiers, a report with a smaller reporting configuration identifier has a higher priority.

8. The method according to claim 2, wherein in a case that the first priority rule is related to the measurement result carried in the third report, the first priority rule comprises at least one of the following:

a priority of a first report that carries a measurement result of a current serving object is higher than a priority of a first report that does not carry the measurement result of the current serving object; and
a priority of a first report that carries at least one measurement result of a first object associated with a second frequency point is higher than a priority of a first report that carries only a measurement result of a first object associated with a first frequency point, wherein the first frequency point is a frequency point at which the current serving object of the terminal is located, and the second frequency point is a frequency point different from the first frequency point.

9. The method according to claim 2, wherein in a case that the first priority rule is related to the measurement resource associated with the third report, the first priority rule comprises:
a priority of a first report that is associated with at least one measurement resource associated with a second frequency point is higher than a priority of a first report that is associated with a measurement resource only associated with a first frequency point, wherein the first frequency point is a frequency point at which the current serving object of the terminal is located, and the second frequency point is a frequency point different from the first frequency point.

10. The method according to claim 2, wherein in a case that the third report comprises the first report and the second report, the first indication information indicates whether a priority of the first report is higher or lower than a priority of the second report; and a type of the first report is the same as a type of the second report.

11. The method according to claim 2, wherein in a case that the first priority rule is related to the priority value of the third report, the first priority rule comprises at least one of the following:

a priority of a first report is related to a priority value of the first report, and a smaller priority value indicates a higher priority of a corresponding first report; and

in the first report and the second report that are associated with different priority values, a report with a smaller priority value has a higher priority.

12. The method according to any one of claims 2 to 11, wherein the second report satisfies at least one of the following:

the second report is associated with only a measurement resource of the current serving object of the terminal; and

the second report is associated with at least one measurement resource of a second object, wherein the second object is different from the current serving object of the terminal, and configuration information of the measurement resource of the second object is comprised in configuration information of the current serving object of the terminal.

13. The method according to claim 2, further comprising:
determining, by the terminal, the priority value of the third report based on a first parameter, wherein the first parameter comprises at least one of the following:

first information, wherein the first information indicates whether the priority of the first report is higher than a priority of the second report, and the first information is configured or indicated by a network;

the time-domain reporting characteristic and the reporting resource that correspond to the third report;

the reported measurement quantity corresponding to the third report;

the serving cell identifier associated with the third report; and

the reporting configuration identifier corresponding to the third report.

14. The method according to claim 2, wherein the first report is a beam report or a Channel State Information CSI report; and the second report is a beam report or a CSI report.

15. The method according to any one of claims 1 to 14, wherein in a case that at least two first reports conflict, and the at least two conflicting first reports comprise at least one semi-persistent first report whose reporting resource is a PUSCH and at least one semi-persistent first report whose reporting resource is a PUCCH, the terminal skips transmitting the at least one semi-persistent first report whose reporting resource is the PUCCH; and
in a case that reporting resources associated with the at least two first reports overlap in time domain and belong to a same component carrier in frequency domain, the at least two first reports conflict.

16. The method according to any one of claims 1 to 14, wherein in a case that at least two first reports conflict, the method further comprises:
performing, by the terminal, transmission according to a preset rule, wherein the preset rule comprises at least one of the following:

performing, by the terminal, first transmission based on priorities of the at least two first reports in a case that both time-domain reporting characteristics and reporting resource types of the at least two conflicting first reports are the same, wherein the first transmission comprises discarding or multiplexing; or

skipping, by the terminal in a case that the time-domain reporting characteristics or the reporting resource types of the at least two conflicting first reports are different, sending a first report with a low priority in a plurality of conflicting first reports if a first case is not satisfied, wherein

the first case is that the at least two first reports comprise at least one semi-persistent first report whose reporting resource is a PUSCH and at least one semi-persistent first report whose reporting resource is a PUCCH; and

in a case that reporting resources associated with the at least two first reports overlap in time domain and belong to a same component carrier in frequency domain, the at least two first reports conflict.

17. The method according to any one of claims 2 to 14, further comprising:

performing, by the terminal, transmission according to a first preset rule in a case that the first report and the second report conflict, wherein

the first preset rule comprises at least one of the following:

skipping, by the terminal, reporting the second report if the first report is a semi-persistent report whose reporting resource is a PUSCH and the second report is a semi-persistent report whose reporting resource is a PUCCH;

skipping, by the terminal, reporting a report with a lower priority in the first report and the second report if the first report is a semi-persistent report whose reporting resource is a PUCCH and the second report is a semi-persistent report whose reporting resource is a PUSCH;

performing, by the terminal, first transmission based on priorities of the first report and the second report if a time-domain reporting characteristic and reporting resource type corresponding to the first report are the same as a time-domain reporting characteristic and reporting resource type corresponding to the second report, wherein the first transmission is multiplexing or discarding; and

skipping, by the terminal, reporting the report with the lower priority in the first report and the second report if the time-domain reporting characteristic or the reporting resource type that corresponds to the first report is different from the time-domain reporting characteristic or the reporting resource type that corresponds to the second report and if a second case is not satisfied, wherein

the second case is that the first report is a semi-persistent report whose reporting resource is a PUCCH and the second report is a semi-persistent report whose reporting resource is a PUSCH, or the first report is a semi-persistent report whose reporting resource is a PUSCH and the second report is a semi-persistent report whose reporting resource is a PUCCH; and

in a case that a reporting resource associated with the first report and a reporting resource associated with the second report overlap in time domain and belong to a same component carrier in frequency domain, the first report and the second report conflict.

18. The method according to any one of claims 2 to 14, wherein the arranging, by the terminal, the content of the first report based on the priority to generate the UCI, and transmitting the UCI on the target resource comprises any one of the following:

arranging, by the terminal, a plurality of target reports in descending order of priority based on priorities of the target reports in a case that the target resource is capable of carrying the plurality of conflicting target reports, to generate the UCI, and transmitting the UCI on the target resource; and

arranging, by the terminal, the plurality of conflicting target reports in descending order of priority based on the priorities of the target reports in a case that the target resource is incapable of carrying the plurality of conflicting target reports, to generate first UCI, truncating second UCI of a preset length from the first UCI by taking the target report as a unit, and transmitting the second UCI on the target resource, wherein the preset length is related to a carrying capability of the target resource; and

the plurality of conflicting target reports are at least two conflicting first reports, reporting resources associated with the at least two first reports overlap in time domain and belong to a same component carrier in frequency domain, and no semi-persistent report whose reporting resource is a PUSCH and no semi-persistent report whose reporting resource is a PUCCH exist in the at least two first reports; or

the plurality of conflicting target reports comprise a first report and a second report, a reporting resource associated with the first report and a reporting resource associated with the second report overlap in time domain and belong to a same component carrier in frequency domain, and reporting resource types corresponding to the first report and the second report are the same.

19. A transmission method, comprising:

receiving, by a network-side device, UCI reported by a terminal, wherein the UCI comprises content of a first report arranged based on a priority of the first report, and the priority of the first report is determined according to a first priority rule,

the first report comprises at least one measurement result associated with a first object, and the first object is an object different from a current serving object of the terminal.

20. The method according to claim 19, further comprising:
indicating or configuring, by the network-side device, first indication information to the terminal, wherein the first indication information indicates the priority of the first report.

21. A transmission apparatus, applied to a terminal and comprising:

a determination module, configured to determine a priority of a first report according to a first priority rule; and

a transmission module, configured to arrange content of the first report based on the priority to generate UCI, and transmit the UCI on a target resource, wherein

the first report comprises at least one measurement result associated with a first object, and the first object is an object different from a current serving object of the terminal.

22. The apparatus according to claim 21, wherein the first priority rule comprises at least one of the following:

a time-domain reporting characteristic corresponding to a third report;

a reported measurement quantity corresponding to the third report;

a reporting resource corresponding to the third report;

a serving cell identifier associated with the third report; and

a reporting configuration identifier corresponding to the third report;

a measurement result carried in the third report;

a measurement resource associated with the third report;

a priority value of the third report; and

first indication information, wherein the first indication information indicates the priority of the first report, and the first indication information is configured or indicated by a network-side device; and

the third report comprises at least one of the first report and a second report.

23. A transmission apparatus, applied to a network-side device and comprising:

a receiving module, configured to receive UCI reported by a terminal, wherein the UCI comprises content of a first report arranged based on a priority of the first report, and the priority of the first report is determined according to a first priority rule,

the first report comprises at least one measurement result associated with a first object, and the first object is an object different from a current serving object of the terminal.

24. The apparatus according to claim 23, further comprising:

an execution module, configured to indicate or configure first indication information to the terminal, wherein the first indication information indicates whether the priority of the first report is higher than or lower than a priority of a second report, and a type of the first report is the same as a type of the second report.

25. A terminal, comprising a processor and a memory, wherein the memory stores a program or instructions runnable on the processor, and the program or instructions are executed by the processor to implement the steps of the transmission method according to any one of claims 1 to 18.

26. A network-side device, comprising a processor and a memory, wherein the memory stores a program or instructions runnable on the processor, and the program or instructions are executed by the processor to implement the steps of the transmission method according to claim 19 or 20.

27. A readable storage medium, wherein the readable storage medium stores a program or instructions, and the program or instructions are executed by a processor to implement the steps of the transmission method according to any one of claims 1 to 18, or implement the steps of the transmission method according to claim 19 or 20.

Network-side device

11

11

Terminal

Terminal

FIG. 1

| A terminal determines a priority of a first report according to a first priority rule | 201 |

FIG. 2

| The terminal arranges content of the first report based on the priority to generate UCI, and transmits the UCI on a target resource | 202 |

| A network-side device receives UCI reported by a terminal, where the UCI includes content of a first report arranged based on a priority of the first report, and the priority of the first report is determined according to a first priority rule | 301 |

FIG. 3

Transmission apparatus — 400

Determination module — 401

Transmission module — 402

FIG. 4

FIG. 5

FIG. 6

FIG. 7

FIG. 8

# EP 4 757 400 A1

<table>
<tr><td colspan="2">INTERNATIONAL SEARCH REPORT</td><td>International application No.<br><br>**PCT/CN2024/109692**</td></tr>
</table>

**A. CLASSIFICATION OF SUBJECT MATTER**

H04W 24/10(2009.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC: 报告, 测量, 附近, 邻, 排列, 排序, 切换, 上行控制信息, 小区, 优先级, priority, UCI, report?, uplink control information

**C. DOCUMENTS CONSIDERED TO BE RELEVANT**

| Category* | Citation of document, with indication, where appropriate, of the relevant passages | Relevant to claim No. |
|---|---|---|
| X | CN 110034852 A (HUAWEI TECHNOLOGIES CO., LTD.) 19 July 2019 (2019-07-19) description, paragraphs 0185-0187 and 0271 | 1-27 |
| A | CN 111277357 A (VIVO COMMUNICATION TECHNOLOGY CO., LTD.) 12 June 2020 (2020-06-12) entire document | 1-27 |
| A | CN 115334536 A (BEIJING UNISOC COMMUNICATION TECHNOLOGY CO., LTD.) 11 November 2022 (2022-11-11) entire document | 1-27 |
| A | WO 2023044228 A1 (QUALCOMM INC.) 23 March 2023 (2023-03-23) entire document | 1-27 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 October 2024** | **01 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
#### Information on patent family members

International application No.

**PCT/CN2024/109692**

| Patent document cited in search report | | | Publication date (day/month/year) | Patent family member(s) | | | Publication date (day/month/year) |
|---|---|---|---|---|---|---|---|
| CN | 110034852 | A | 19 July 2019 | None | | | |
| CN | 111277357 | A | 12 June 2020 | None | | | |
| CN | 115334536 | A | 11 November 2022 | None | | | |
| WO | 2023044228 | A1 | 23 March 2023 | US | 2024322966 | A1 | 26 September 2024 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311012489X
- CN 202310979064X